# EUROPEAN PATENT SPECIFICATION

(11) **EP 3 897 292 B1**
(45) Date of publication and mention of the grant of the patent: **24.01.2024**
(21) Application number: 19835505.9
(22) Date of filing: 16.12.2019
(51) Int. Cl.: A47B 57/50, A47B 96/06, F16B 12/10

(54) **SUPPORTING AND STABLE POSITIONING SYSTEM FOR A SHELF OF A PIECE OF FURNITURE**
STÜTZENDES UND STABILES POSITIONIERSYSTEM FÜR EIN REGAL EINES MÖBELS
SYSTÈME DE POSITIONNEMENT ET DE SUPPORT STABLE POUR UNE ÉTAGÈRE D'UN MEUBLE

(30) Priority: 21.12.2018 IT 201800020668
(43) Date of publication of application: 27.10.2021
(73) Proprietor: Camar S.p.A., 22060 Figino Seenza (CO) (IT)
(72) Inventor: SALA, Giorgio, 22040 Brenna (CO) (IT)
(74) Representative: Dragotti & Associati S.R.L.
(86) International application number: PCT/IB2019/060832
(87) International publication number: WO 2020/128776

(56) References cited:
- EP-A1- 0 753 275
- JP-A- H08 170 618
- JP-U- S6 287 551
- JP-U- S60 121 515
- US-A1- 2011 165 787

## Description

The present invention relates to a supporting and stable positioning system for a shelf of a piece of furniture.

In the field of furniture and similar types of furnishing items, there is the need for positioning an intermediate shelf between the shoulders of the relative structure and/or this positioning can be variable in height according to the user's requirement.

JP S6287551 describes a supporting and stable positioning system of a shelf according to the prior art.

EP 753 275 describes an improved fixing unit for the rapid fixing of iron fittings, such as drawer runners or door hinges.

US 2011/165787 describes a bayonet-connection device with minimum encumbrance.

JP S60 121515 U and JP H08 170618 describe further relevant prior art.

For the positioning of this type of intermediate shelf at the desired and required height between the shoulders of the structure, there is currently the provision of producing holes in the shoulders within which a plug or similar element is then positioned which, together with at least three other plugs, receives and supports said shelf. This must be effected on both sides of the furniture along the at least two shoulders of the furniture itself.

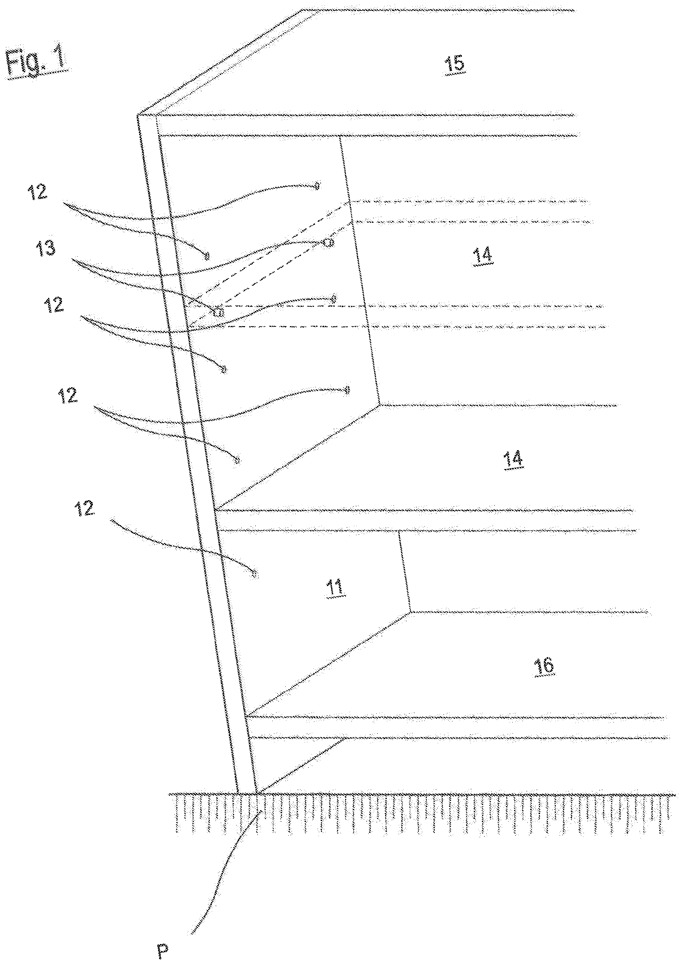

Figure 1 illustrates this type of arrangement showing a shoulder 11 in which holes 12 are produced vertically aligned superimposed and spaced apart. These holes 12 are suitable for receiving plugs 13, forced into the holes 12 at the desired height, and which subsequently receive and support a shelf schematized in 14. The shelf 14 is also shown in a dashed line so as to highlight the action of the underlying plugs 13. The furniture also comprises a top 15 and a bottom 16 fixed to the shoulders 1.

As shown in figure 1, in order to have a height-adjustable positioning, visible holes must be produced which are suitable for receiving these supporting plugs of the shelf. In general, unless otherwise provided, in order to have a height-adjustable positioning, a series of closely spaced holes (two or three) are currently provided for the positioning of each shelf, which specifically give the possibility of having a variable positioning of the shelf in height.

In this case of the prior art, there are therefore various free holes in the shoulders, aligned on the two shoulders at different heights and suitable for receiving plugs forced into the same at the desired height.

In these examples, the plug is force-inserted but it is possible however that due to various types of stress, it can come out of the hole or not remain in a straight and perpendicular position with respect to the shoulder, causing difficulty for a stable positioning of the shelf resting on the same.

Furthermore, as already mentioned, the shelf is simply resting on the plugs, but it is possible however that, due to some external stress, it can move and/or slip out of its position, also in this case creating the possibility of bad positioning and/or falling from the rest on the plugs supporting the same.

The general objective of the present invention is to provide a supporting and stable positioning system for a shelf of a piece of furniture capable of solving the above-mentioned drawbacks of the prior art in an extremely simple, economic and particularly functional way.

A further objective of the present invention is to provide a supporting and stable positioning system for a shelf of a piece of furniture which is capable of favouring the assembly of the shelf, facilitating its operations.

Another objective of the present invention is to provide a supporting and stable positioning system for a shelf of a piece of furniture which is aesthetically valid also in the presence of a stable and fixed positioning with respect to the shoulders of the piece of furniture.

The above-mentioned objectives are achieved by a supporting and stable positioning system for a shelf of a piece of furniture produced according to independent claim 1 and the following claims.

The structural and functional characteristics of the present invention and its advantages with respect to the known art will appear more evident from the following description, referring to the attached schematic drawings, which show an embodiment example of the invention. In the drawings:
- figure 1 shows a perspective view of a shoulder, a top and a base of a piece of furniture bearing shelves that can be positioned at different and pre-selected heights according to the state of the art so far known;
- figures 2 and 3 show a perspective view of a shoulder and a bottom of a piece of furniture and a partially sectional view of an enlarged detail of the shoulder wherein the shoulder shown is equipped with a series of overlapping and spaced holes each suitable for receiving an expandable bush forming part of the supporting and stable positioning system for a shelf of a piece of furniture according to the present invention;
- figures 4 and 5 show a perspective view of a shoulder, partially sectional in correspondence with a hole, wherein the expandable bush of figure 3 is inserted in the hole in an assembly phase in which it receives a shelf support also forming part of the supporting and stable positioning system for a shelf of a piece of furniture according to the present invention;
- figures 6 and 7 show a perspective view of a shoulder, partially sectional in correspondence with a hole, when a further assembly step is effected in the hole provided with the expanding bush of figure 3, by rotating the shelf support, which also forms part of the system according to the present invention;
- figures 6b and 7b are cross-sections of what is shown in figures 6 and 7, whereas figure 7c is a longitudinal section of the shelf support as shown and positioned in figure 7;
- figures 8 and 9 show a perspective view of a shoulder, partially sectional in correspondence with a hole provided with an expandable bush in which a shelf support has been inserted, as in figure 7, suitable for receiving a shelf provided with a housing in consecutive assembly steps, wherein an optional coupling shell is arranged in the housing, also forming part of the supporting and stable positioning system for a shelf of a piece of furniture according to the present invention;
- figures 8b and 9b are cross-sections of what is shown in figures 8 and 9;
- figures 10, 10b and 10c show perspective views according to different angles and different sections of various steps for the positioning of a coupling shell in a housing of a shelf;
- figures 11 to 17 show, in various views and sections, an expandable bush according to an embodiment and used in the supporting and stable positioning system for a shelf of a piece of furniture according to the present invention;
- figures 18 to 26 show, in various views and sections, a shelf support according to an embodiment and used in the supporting and stable positioning system for a shelf of a piece of furniture according to the present invention;
- figures 27 to 37 show, in various views and sections, a shell suitable for receiving a shelf support according to an embodiment and used in the supporting and stable positioning system for a shelf of a piece of furniture according to the present invention.

With reference to the figures, these show by way of nonlimiting example, an embodiment of a supporting and stable positioning system for a shelf of a piece of furniture according to the present invention.

In particular, some figures show various details of the system in one of their embodiments and other figures show assembly steps of the system of the invention which make it particularly effective and advantageous with respect to what has hitherto been known and used in the art for furniture and the like.

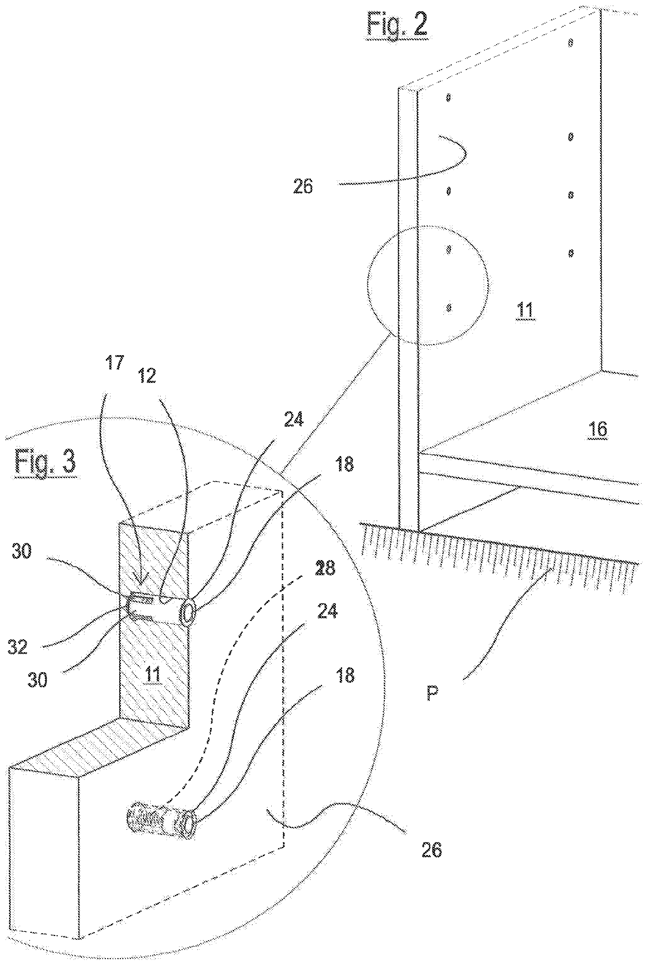

With particular reference to figures 2 and 3, it can be seen that a supporting and stable positioning system for a shelf according to the invention is intended for a piece of furniture which essentially comprises a pair of shoulders 11, only one of which is shown, arranged on a floor P extending vertically upwards. It is also evident that between these shoulders 11, a series of shelves 14 can be arranged at different preselected heights thanks to the fact that a series of holes 12 is provided on each shoulder 11, formed on the vertical surfaces of the two shoulders facing each other. These holes 12 are overlapping and spaced in two vertical rows and are arranged on the two shoulders 11 at a series of corresponding heights in the two rows.

According to the present invention, an expandable bush 17 is inserted in each hole 12 provided with a movable stopper 18 facing a shelf 14 or a shoulder 11 opposite that in which the above-mentioned bush 17 is inserted. It can also be noted how the expandable bush 17 is substantially suitable for receiving a pin or shank 19 which extends from a shelf support, indicated as a whole by 20.

As will be clarified and observed later from the description, the pin 19 of said shelf support 20 can be rotated within the expandable bush 17 so as to allow the shelf support 20 to be positioned in a housing 21 formed in the shelf 14 in a surface 22 which is arranged downwards facing the floor P.

This general arrangement forms the system according to the present invention present on both shoulders 11 of the piece of furniture that uses it.

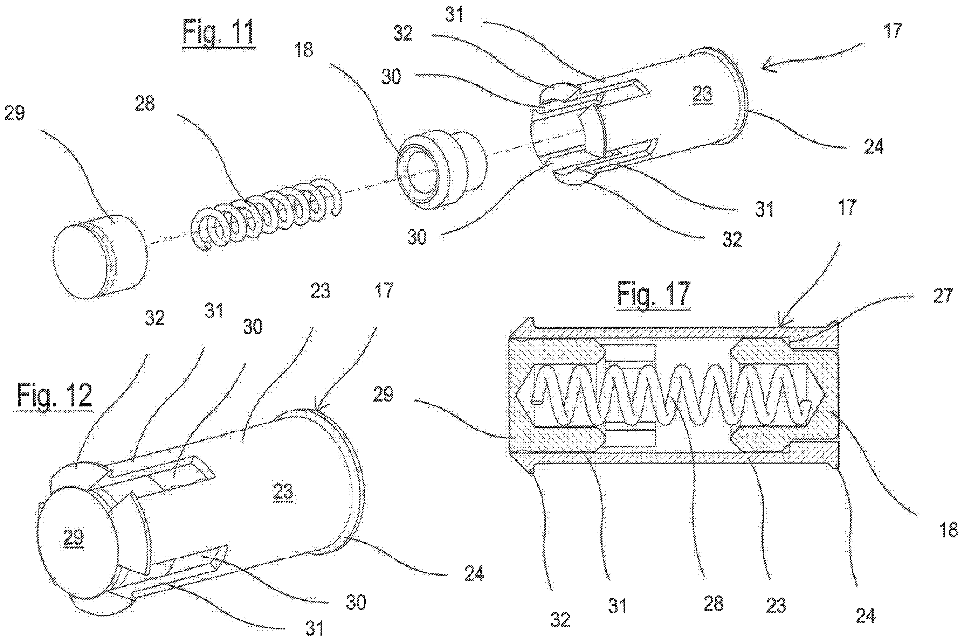

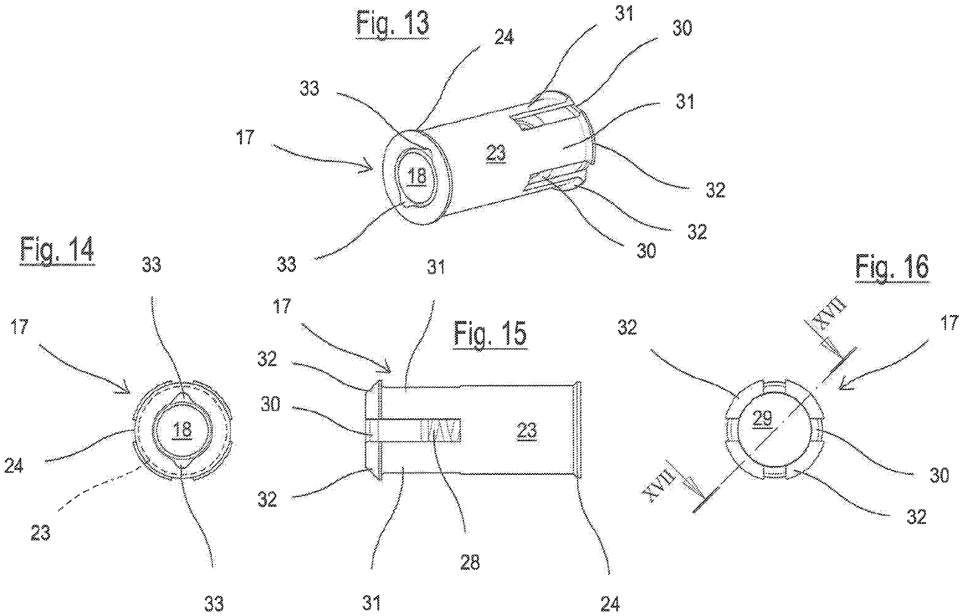

Figures 11 to 17 show in various views and sections this type of expandable bush 17 according to an embodiment as used in the supporting and stable positioning system for a shelf of a piece of furniture according to the present invention.

In particular, it can be noted that this bush 17 has a cylindrical external body 23. The cylindrical body 23 at one of its first ends can provide a small flange 24, facing radially outwardly, which creates an optimal and stable housing in a flared end 25 of the hole 12 formed in an internal surface 26 of the shoulder 11 facing the shelf 14 or an opposite shoulder 11 of the furniture.

The axially movable stopper 18 is inserted in the external body 23 within the body 23 which is pushed to align with the above-mentioned internal surface 26 of said shoulder 11, in which the hole 12 has been formed, by means of a spring 28 arranged in said bush 17. An expanding pin 29 is also provided, which slides in said body 23 and can be moved between a rest position in an internal area of the body 23 and an operating position at an end portion of the body 23 which provides a series of notches 30 axially formed therein which define tabs 31. Said tabs 31 provide, at one of their free ends, engagement and retaining teeth 32 radially protruding towards the outside of the body 23 to be able to be engaged with the internal surface of the hole 12 in which the expandable bush 17 is positioned.

The spring 28 is specifically arranged between the stopper 18 and the expanding pin 29 so that it keeps them at opposite ends of the bush 17. Furthermore, the spring 28 is such as to keep the stopper 18 normally aligned with the internal surface 26 of the shoulder 11, creating a perfect closing of the hole 12.

It should also be noted that the expandable bush 17 in the small flange 24 of the external body 23 provides at least one groove 33 through which a respective retaining tooth 34 passes, protruding laterally and radially outwardly from the pin or shank 19 which extends from the shelf support 20. In the example shown, two grooves 33 are provided in the small flange 24 of the external body 23 and two retaining teeth 34 protruding from the pin or shank 19.

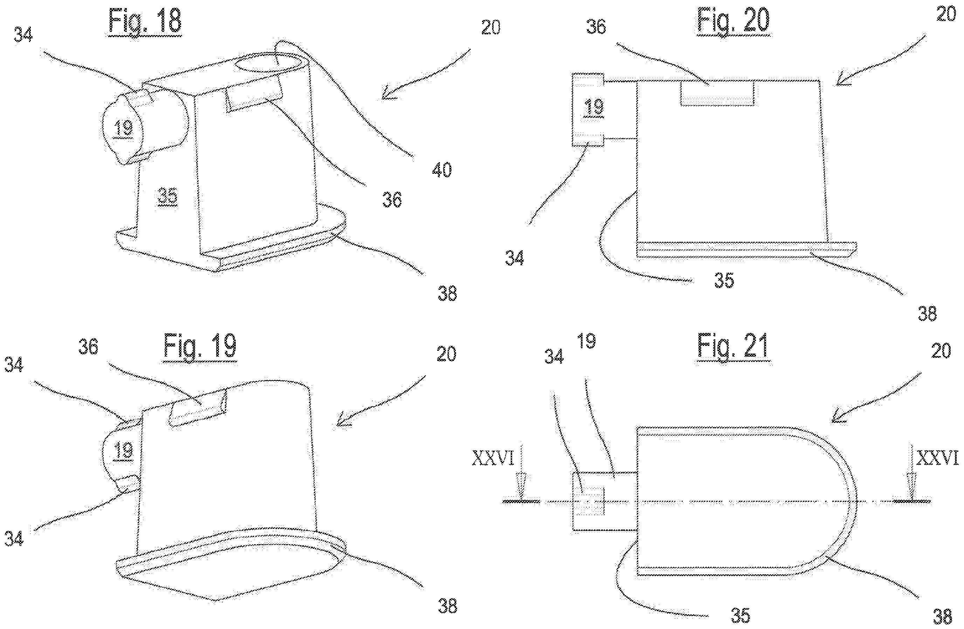

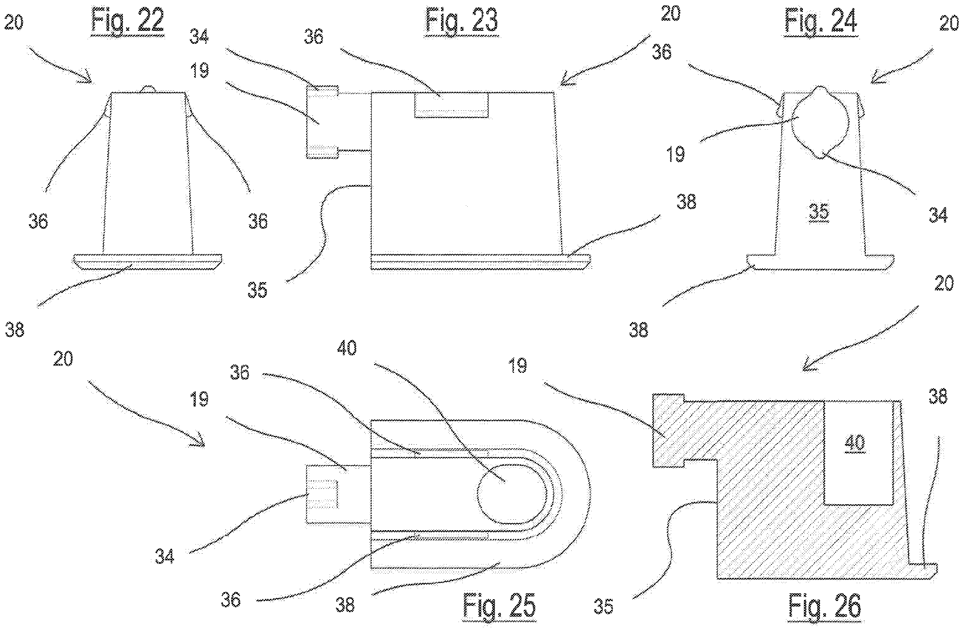

With respect now to the shelf support 20, shown in detail in all its details in figures 18 to 26, the following can be noted.

In the embodiment shown, the shelf support 20 provides a box-shaped body that is complementary to the housing 21 formed in the shelf 14 in the above-mentioned surface 22 which is positioned downwardly facing the floor P, when the shelf is mounted in the furniture. In the embodiment shown, the body of the shelf support is flared externally so as to be better positioned inside the housing 21.

As already noted, the shelf support 20 also provides the pin or shank 19 which extends laterally thereto from a flat surface 35 facing the internal surface 26 of the shoulder 11, thus being able to move on it and with respect to it.

Furthermore, it provides on its lateral surface, hooks or extensions 36 in the form of notches which form snap-on means for retaining the shelf support 20 in its housing 21 formed in said shelf or in a specific shell 37 which will be seen further on.

In the example shown, there is also the provision of a perimetric abutment 38 extending outwardly which defines a supporting surface of the shelf support 20 with respect to a complementary countersink 39 of the housing 21 of the shelf 14.

The body of the shelf support 20 also provides on its surface, opposite to that equipped with the perimetric abutment 38, a blind hole 40 for receiving a pin extension 41 which extends from the body of the shell 37 towards the inside of the same shell 37.

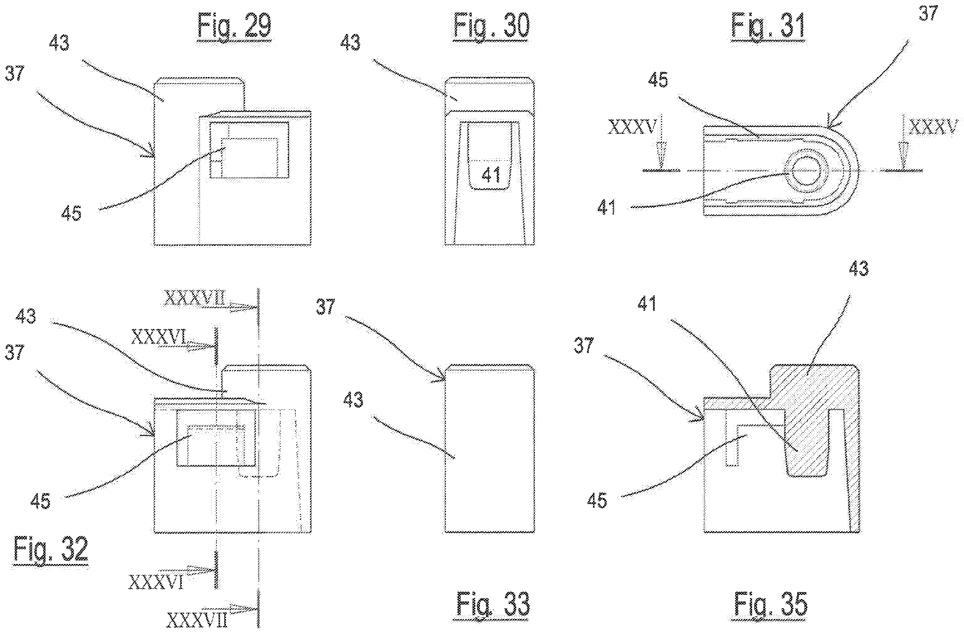

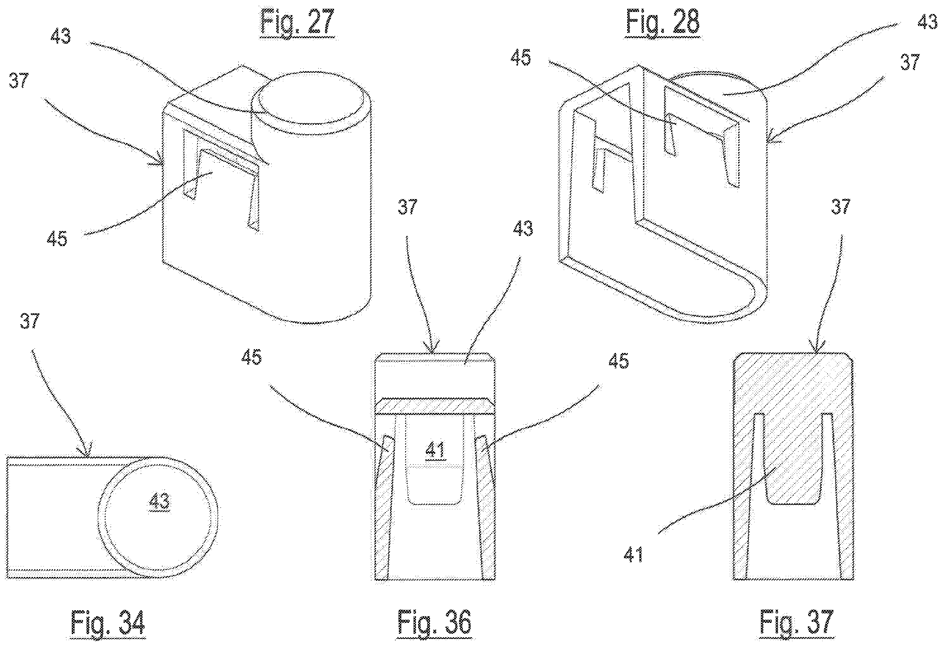

The above-mentioned shell 37 is shown in detail in its embodiment illustrated in figures 27 to 37.

The shell 37 in its external surface which faces the internal surface of the housing 21 provides a protruding cylindrical part 43 which is housed in a complementary hollow extension 44 of the housing 21 itself hollowed towards the inside of the shelf 14.

The lateral surface of the shell 37 also provides seats or openings facing inwardly 45 suitable for receiving the hooks or extensions 36 in the form of notches as snap-on means for retaining the shelf support 20 directly in the shell 37.

Figures 2 to 10c show, with a series of positions from different angles and different sections, some steps for positioning the entire supporting and stable positioning system for a shelf of a piece of furniture.

Figures 2 and 3, in fact, show how the bushes 17 are inserted in the holes 12 previously formed according to a certain "design" in the shoulders 11 of the furniture. As already mentioned, each bush 17 has the small flange 24 of the cylindrical external body 23 in the flared end 25 of the hole 12 formed in an internal surface 26 of the shoulder 11. This causes the bush 17 to be perfectly aligned with the internal surface 26 of the shoulder 11 level with the same, and the furniture has an optimal appearance.

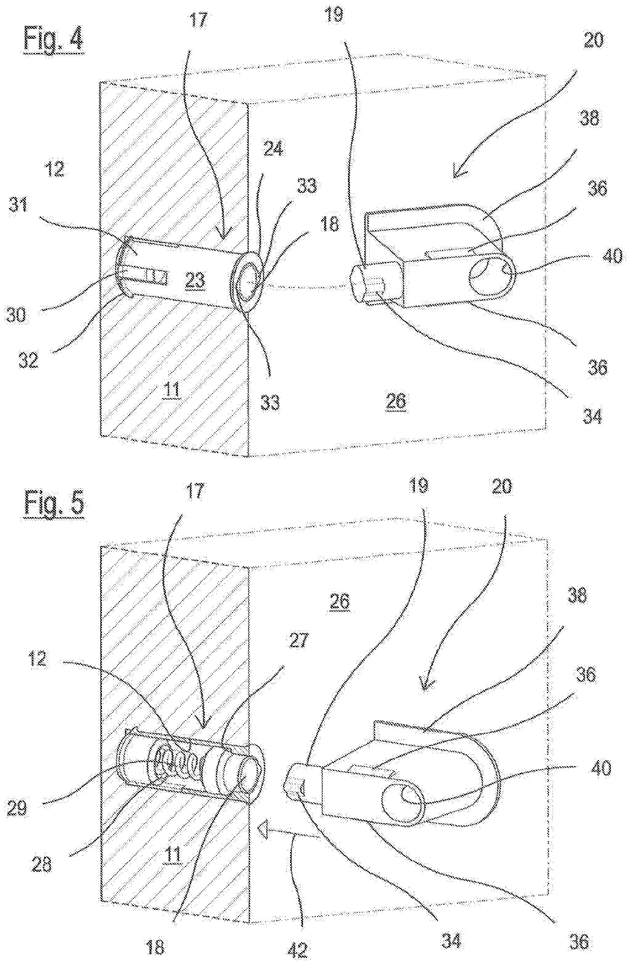

Figures 4 and 5 then show how the shelf support 20 is inserted with respect to the hole 12 and the bush 17.

First of all, in fact, the two teeth 34 protruding from the pin or shank 19 which extends from the shelf support 20 are aligned with the two grooves 33 present in the small flange 24 of the external body 23 of the bush 17 (figure 4).

These retaining teeth 34 are then inserted in the two grooves 33 of the flange 24 according to the arrow 42 of figure 5.

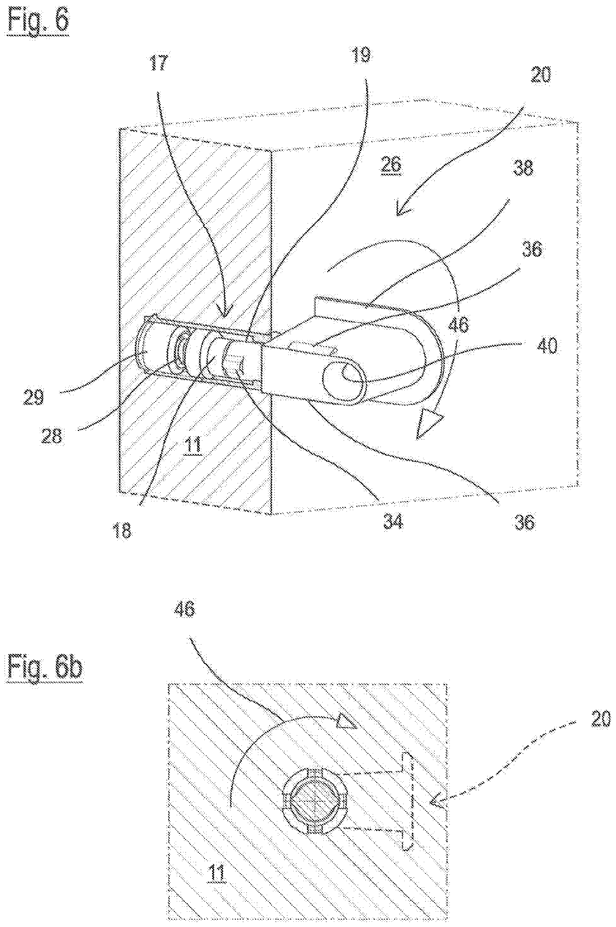

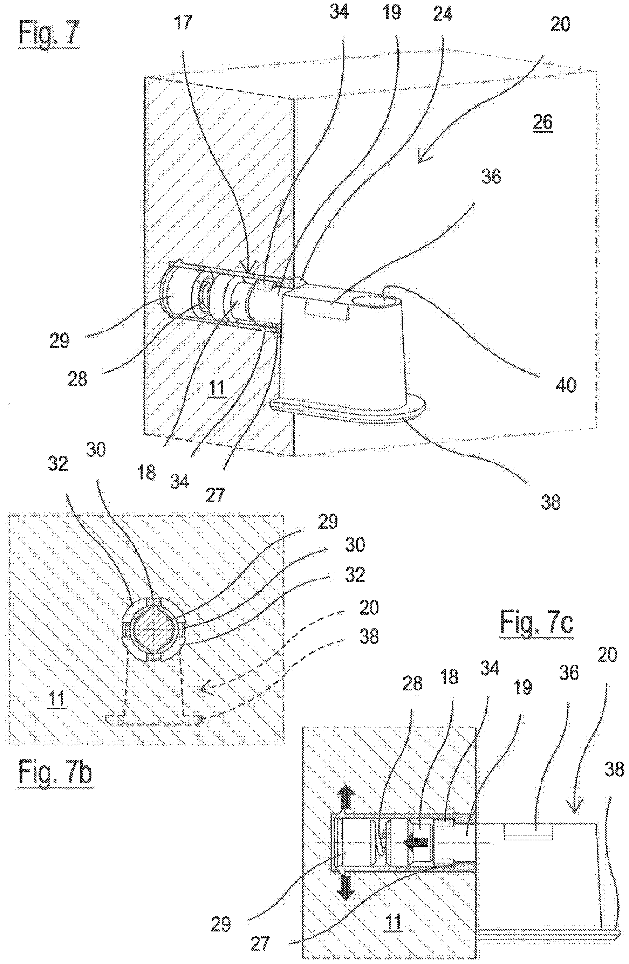

Once this insertion has been effected, the shelf support 20 is rotated inside the hole 12 according to the arrow 46 as shown in figure 6, until it is arranged in the position of figures 7 and 7c in an operating position ready to receive the relative shelf 14 and support it in an operating position.

It should be noted (and it can be seen from figures 6 to 7c) that by inserting the pin or shank 19 of the shelf support 20 in the bush 17 inserted in the hole 12, a stable positioning of the parts is also achieved.

The presence of the retaining teeth 34, in fact, prevents the pin or shank 19 of the shelf support 20 from being removed or exiting from the bush 17. The provision of a perforated end having a small diameter in the bush 17 (in correspondence with the flange 24) forms an abutment surface 27 for the retaining teeth 34. Once the retaining teeth 34 have been inserted and rotated, in fact, they guarantee a secure blockage between the parts inserted in each other, as they are abutted against the abutment surface 27.

Subsequently, when the pin or shank 19 of the shelf support 20 is inserted into the bush 17, it pushes the stopper 18 towards the inside of the bush 17 and the spring 28 associated with it is compressed. Likewise, the expanding pin 29 can be pushed by the spring 28, if provided with a certain elastic force alone sufficient for the thrust. The compression of the spring 28 takes place to such an extent that the expanding pin 29 is arranged between the tabs 31 expanding them radially until the engagement and retaining teeth 32 radially protruding towards the outside of the body 23 become engaged on the internal surface of the hole 12 firmly blocking the bush 17 in the hole 12 (figure 7c).

If the shelf 14 does not provide for receiving the shell 37, it is sufficient to proceed with the insertion of the shelf 14 provided with the respective housing 21 formed in its surface 22 which is positioned downwardly facing the floor P on the shelf support 20. This operation is naturally carried out for all four shelf supports 20 which are arranged in the two shoulders 11 for receiving a shelf 14 equipped with four respective housings 21.

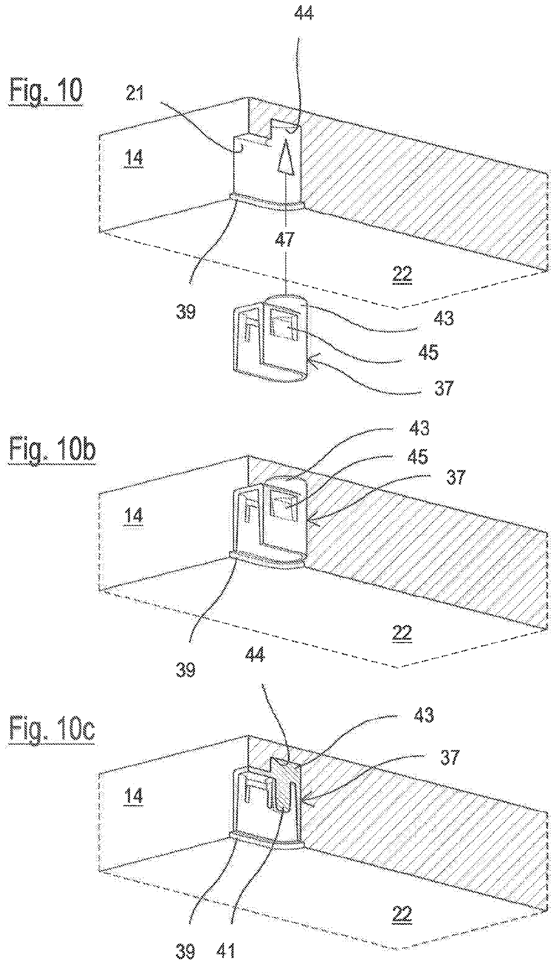

If, on the other hand, the presence of a shell 37 is provided in each housing 21 of the shelf 14, the procedure shown in figures 10 to 10b is effected. These in fact show how the single shell 37 is aligned with the respective housing 21 of the shelf 14 and is inserted in the same according to the arrow 47. In this way, its parts are coupled with those of the shelf 14 and the shell 37 is kept in position thanks to the engagement of its protruding cylindrical part 43 which is housed in the hollow complementary extension 44 of the housing 21 (figure 10c). If the shell 37 is missing, a protruding cylindrical part similar to that indicated by 43 should be produced as an extension of the shelf support 20.

Once the stable positioning of the shell 37 has been effected, it is possible to proceed with the positioning of the shelf 14 similarly to what is indicated above.

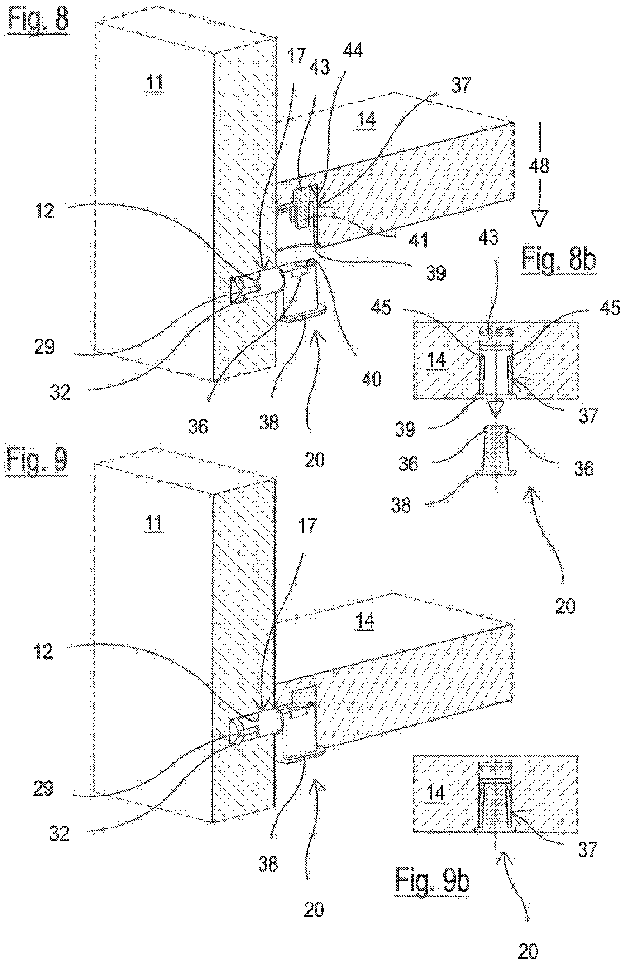

The whole is best shown in figures 8, 8b and 9, 9b. The shelf 14 provided with shell 37 is in fact aligned above the shelf support 20 inserted in the operating position in the shoulder 11 as previously described.

By moving the shelf 14 downwards in the direction of the arrow 48, the stable positioning of the parts is thus achieved.

From figure 9 it can be seen how all the parts forming the supporting and stable positioning system for a shelf of a piece of furniture according to the present invention are stably coupled.

The expandable bush 17 is stably anchored inside the hole 12 of the shoulder 11 thanks to the fact that the engagement and retaining teeth 32 radially protruding towards the outside of the body 23 of the bush itself have become engaged on the internal surface of the hole 12 thanks to the action of the expanding pin 29 which is arranged between the tabs 31 expanding them radially.

The shelf support 20 is firmly anchored inside the bush 17 thanks to the insertion of the two teeth 34 in the two grooves 33 of the flange 24 and therefore inside the bush 17.

The shell 37 is firmly anchored in the housing 21 of the shelf 14 thanks to the engagement of the protruding cylindrical part 43 in the hollow complementary extension 44 of the housing 21 itself of the shelf 14.

The shelf support 20 is firmly anchored inside the shell 37 thanks to the engagement of the pin 41 which extends from the body of the shell 37 and is inserted in the blind hole 40 of the shelf support 20. Furthermore, if present, the hooks or extensions 36 in the form of notches formed on the body of the shelf support 20 are snap-inserted in the seats or openings 45 facing the inside of the shell 37.

The objective mentioned in the preamble of the description has thus been achieved.

The protection scope of the present invention is defined by the enclosed claims.

## Claims

1. A supporting and stable positioning system suitable for a shelf of a piece of furniture, wherein said piece of furniture comprises a pair of shoulders (11) positioned on a floor (P) and between which shelves (14) are arranged, each shoulder (11) providing a series of spaced overlapping holes (12), and wherein said system comprises a bush (17) and a shelf support (20), said bush being suitable to be inserted in each hole (12), said bush (17) being suitable for receiving a pin (19) which extends from said shelf support (20), wherein said pin (19) of said shelf support (20) is rotatable within said bush (17) so as to allow said shelf support (20) to be positioned in a housing (21) formed in said shelf (14) in a surface thereof (22) facing said floor (P), and said bush is expandable (17) and provided with a movable stopper (18) facing a shelf (14) or towards an opposite shoulder (11) **characterized in that** said movable stopper (18) is pushed to align with a surface of said shoulder (11) in which said hole (12) is formed by means of a spring (28) arranged in said bush (17).

2. The system according to claim 1, **characterized in that** said expandable bush (17) arranged in a hole (12) of said shoulder (11) provides, in a surface (24) facing said shelf (14) or an opposite shoulder (11), at least one groove (33) in which a retaining tooth (34) protruding laterally from said pin (19) of said shelf support (20), passes.

3. The system according to claim 2, **characterized in that** said expandable bush (17) provides an abutment surface (27) for said retaining tooth (34).

4. The system according to claim 1, **characterized in that** said movable stopper (18), when said pin (19) of said shelf support (20) is inserted in said bush (17), pushes a second expanding pin (29) inside said bush (17) towards an extreme area of said bush (17) and causes its expansion in said hole (12) .

5. The system according to claim 4, **characterized in that** said second expanding pin (29) acts in an end portion of a body (23) of said bush (17) which provides a series of notches (30) formed axially therein which define engagement tabs (31) inside said hole (12).

6. The system according to claim 5, **characterized in that** said spring (28) is positioned between said second expanding pin (29) and said movable stopper (18), which keeps the same at opposite ends of said bush (17).

7. The system according to claim 5, **characterized in that** said tabs (31) provide, in correspondence with their free end, engagement and retaining teeth (32) protruding radially towards the outside of the body (23) so as to be able to become engaged with an inner surface of the hole (12) in which said expandable bush is (17) is positioned.

8. The system according to one or more of the previous claims, **characterized in that** said shelf support (20) has a box-like shape complementary to said housing (21) formed in said shelf (14).

9. The system according to one or more of the previous claims, **characterized in that** said shelf support (20) provides engagement extensions (36) suitable to be engaged in said housing (21) formed in said shelf (14).

10. The system according to one or more of the previous claims, **characterized in that** a shell (37) suitable for receiving said shelf support (20) is provided, said shell (37) being suitable to be arranged in said housing (21) formed in said shelf (14).

11. The system according to claim 10, **characterized in that** said shell (37) provides seats (45) for extensions (36) of said shelf support (20).

12. The system according to claim 10 or 11, **characterized in that** said shell (37) has a pin (41) which can be inserted in a hole (40) of said shelf support (20).

13. The system according to one or more of the previous claims, **characterized in that** said bush (17), at one of its ends arranged aligned with an inner surface (26) of the shoulder (11) facing the shelf (14) or an opposite shoulder (11) of the piece of furniture, provides a flange (24) in which at least one groove (33) is provided, wherein at least one retaining tooth (34) is engaged, protruding from the pin (19) which extends from the shelf support (20).

14. The system according to one or more of the previous claims, **characterized in that** said shelf support (20) provides a perimetric abutment (38) extending outwardly which defines a supporting surface of the shelf support (20) suitable to be positioned against to a complementary countersink (39) formed in said housing (21) of the shelf (14).

15. The system according to one or more of the previous claims, **characterized in that** four shelf supports (20) are provided, which are arranged two on each side in the two shoulders (11) to receive a shelf (14) provided with four respective housings (21).

## Patentansprüche

1. Stützendes und stabiles Positionierungssystem, das für ein Regal eines Möbelstücks geeignet ist, wobei das Möbelstück ein Paar von Schultern (11) umfasst, die auf einem Boden (P) positioniert sind und zwischen denen Regalböden (14) angeordnet sind, wobei jede Schulter (11) eine Reihe von beabstandeten überlappenden Löchern (12) bereitstellt und wobei das System eine Buchse (17) und einen Regalträger (20) umfasst, wobei die Buchse geeignet ist, in jedes Loch (12) eingesetzt zu werden, wobei die Buchse (17) geeignet ist, einen Stift (19) aufzunehmen, der sich von dem Regalträger (20) erstreckt, wobei der Stift (19) des Regalträgers (20) innerhalb der Buchse (17) drehbar ist, um zu ermöglichen, dass der Regalträger (20) in einem Gehäuse (21) positioniert werden kann, das in dem Regal (14) in einer Oberfläche (22) desselben ausgebildet ist, die dem Boden (P) zugewandt ist, und wobei die Buchse (17) ausdehnbar ist und mit einem beweglichen Stopper (18) versehen ist, der einem Regal (14) oder einer gegenüberliegenden Schulter (11) zugewandt ist, **dadurch gekennzeichnet, dass** der bewegliche Stopper (18) mittels einer Feder (28), die in der Buchse (17) angeordnet ist, so geschoben wird, dass er mit einer Oberfläche der Schulter (11) ausgerichtet ist, in der das Loch (12) ausgebildet ist.

2. System nach Anspruch 1, **dadurch gekennzeichnet, dass** die in einem Loch (12) der Schulter (11) angeordnete ausdehnbare Buchse (17) in einer dem Regal (14) oder einer gegenüberliegenden Schulter (11) zugewandten Fläche (24) mindestens eine Nut (33) aufweist, in der ein seitlich von dem Stift (19) des Regalträgers (20) vorstehender Haltezahn (34) verläuft.

3. System nach Anspruch 2, **dadurch gekennzeichnet, dass** die ausdehnbare Buchse (17) eine Anlagefläche (27) für den Haltezahn (34) bildet.

4. System nach Anspruch 1, **dadurch gekennzeichnet, dass** der bewegliche Stopper (18), wenn der Stift (19) des Regalträgers (20) in die Buchse (17) eingeführt wird, einen zweiten Spreizstift (29) innerhalb der Buchse (17) in Richtung eines äußersten Bereichs der Buchse (17) drückt und seine Ausdehnung in dem Loch (12) bewirkt.

5. System nach Anspruch 4, **dadurch gekennzeichnet, dass** der zweite Spreizstift (29) in einem Endabschnitt eines Körpers (23) der Buchse (17) wirkt, der eine Reihe von axial darin ausgebildeten Kerben (30) bereitstellt, die Eingriffslaschen (31) innerhalb des Lochs (12) definieren.

6. System nach Anspruch 5, **dadurch gekennzeichnet, dass** die Feder (28) zwischen dem zweiten Spreizstift (29) und dem beweglichen Stopper (18) angeordnet ist, der diesen an gegenüberliegenden Enden der Buchse (17) hält.

7. System nach Anspruch 5, **dadurch gekennzeichnet, dass** die Laschen (31) in Übereinstimmung mit ihrem freien Ende Eingriffs- und Haltezähne (32) aufweisen, die radial zur Außenseite des Körpers (23) hin vorstehen, so dass sie mit einer Innenfläche des Lochs (12) in Eingriff gebracht werden können, in dem die ausdehnbare Buchse (17) positioniert ist.

8. System nach einem der vorhergehenden Ansprüche, **dadurch gekennzeichnet, dass** der Regalträger (20) eine kastenartige Form hat, die komplementär zu dem in dem Regal (14) ausgebildeten Gehäuse (21) ist.

9. System nach einem der vorhergehenden Ansprüche, **dadurch gekennzeichnet, dass** der Regalträger (20) Eingriffsverlängerungen (36) bereitstellt, die geeignet sind, in ein in dem Regal (14) ausgebildetes Gehäuse (21) einzugreifen.

10. System nach einem der vorhergehenden Ansprüche, **dadurch gekennzeichnet, dass** eine Schale (37) vorgesehen ist, die zur Aufnahme des Regalträgers (20) geeignet ist, wobei die Schale (37) geeignet ist, in dem in dem Regal (14) ausgebildeten Gehäuse (21) angeordnet zu werden.

11. System nach Anspruch 10, **dadurch gekennzeichnet, dass** die Schale (37) Aufnahmen (45) für Verlängerungen (36) des Regalträgers (20) aufweist.

12. System nach einem der Ansprüche 10 oder 11, **dadurch gekennzeichnet, dass** die Schale (37) einen Stift (41) aufweist, der in ein Loch (40) des Regalträgers (20) eingesetzt werden kann.

13. System nach einem der vorhergehenden Ansprüche, **dadurch gekennzeichnet, dass** die Buchse (17) an einem ihrer Enden, das in Ausrichtung mit einer Innenfläche (26) der dem Regal (14) zugewandten Schulter (11) oder einer gegenüberliegenden Schulter (11) des Möbelstücks angeordnet ist, einen Flansch (24) aufweist, in dem mindestens eine Nut (33) vorgesehen ist, in die mindestens ein Haltezahn (34) eingreift, der von dem Stift (19) vorsteht, der sich von dem Regalträger (20) aus erstreckt.

14. System nach einem der vorhergehenden Ansprüche, **dadurch gekennzeichnet, dass** der Regalträger (20) einen sich nach außen erstreckenden Umfangsanschlag (38) aufweist, der eine Stützfläche des Regalträgers (20) definiert, die geeignet ist, gegen eine komplementäre Senkung (39) positioniert zu werden, die in dem Gehäuse (21) des Regals (14) ausgebildet ist.

15. System nach einem der vorhergehenden Ansprüche, **dadurch gekennzeichnet, dass** vier Regalträger (20) vorgesehen sind, von denen jeweils zwei auf jeder Seite in den beiden Schultern (11) angeordnet sind, um ein mit jeweils vier Gehäusen (21) versehenes Regal (14) aufzunehmen.

## Revendications

1. Système de support et de positionnement stable adapté à une étagère d'un meuble, dans lequel ledit meuble comprend une paire d'épaulements (11) positionnés au sol (P) et entre lesquels des étagères (14) sont disposées, chaque épaulement (11) fournissant une série de trous superposés espacés (12), et dans lequel ledit système comprend une douille (17) et un support d'étagère (20), ladite douille étant adaptée pour être insérée dans chaque trou (12), ladite douille (17) étant adaptée pour recevoir une broche (19) qui s'étend depuis ledit support d'étagère (20), dans lequel ladite broche (19) dudit support d'étagère (20) peut tourner à l'intérieur de ladite douille (17) de manière à permettre audit support d'étagère (20) d'être positionné dans un logement (21) formé dans ladite étagère (14) dans une surface de celle-ci (22) faisant face audit sol (P), et ladite douille est expansible (17) et munie d'une butée mobile (18) faisant face à une étagère (14) ou vers un épaulement opposé (11) **caractérisé en ce que** ladite butée mobile (18) est poussée pour s'aligner avec une surface dudit épaulement (11) dans lequel ledit trou (12) est formé au moyen d'un ressort (28) disposé dans ladite douille (17).

2. Système selon la revendication 1, **caractérisé en ce que** ladite douille expansible (17) disposée dans un trou (12) dudit épaulement (11) présente, dans une surface (24) faisant face à ladite étagère (14) ou à un épaulement opposé (11), au moins une rainure (33) dans laquelle passe une dent de retenue (34) dépassant latéralement de ladite broche (19) dudit support d'étagère (20).

3. Système selon la revendication 2, **caractérisé en ce que** ladite douille expansible (17) présente une surface de butée (27) pour ladite dent de retenue (34).

4. Système selon la revendication 1, **caractérisé en ce que** ladite butée mobile (18), lorsque ladite broche (19) dudit support d'étagère (20) est insérée dans ladite douille (17), pousse une seconde broche expansible (29) à l'intérieur de ladite douille (17) vers une zone d'extrémité de ladite douille (17) et provoque son expansion dans ledit trou (12).

5. Système selon la revendication 4, **caractérisé en ce que** ladite seconde broche expansible (29) agit dans une partie d'extrémité d'un corps (23) de ladite douille (17) qui présente une série d'encoches (30) formées axialement dans celle-ci qui définissent des pattes d'engagement (31) à l'intérieur dudit trou (12).

6. Système selon la revendication 5, **caractérisé en ce que** ledit ressort (28) est positionné entre ladite seconde broche expansible (29) et ladite butée mobile (18), ce qui maintient celui-ci aux extrémités opposées de ladite douille (17).

7. Système selon la revendication 5, **caractérisé en ce que** lesdites pattes (31) présentent, en correspondance avec leur extrémité libre, des dents d'engagement et de retenue (32) dépassant radialement vers l'extérieur du corps (23) de manière à pouvoir s'engager avec une surface intérieure du trou (12) dans lequel est positionnée ladite douille expansible (17).

8. Système selon une ou plusieurs des revendications précédentes, **caractérisé en ce que** ledit support d'étagère (20) a une forme de type caisson complémentaire audit logement (21) formé dans ladite étagère (14).

9. Système selon une ou plusieurs des revendications précédentes, **caractérisé en ce que** ledit support d'étagère (20) présente des extensions d'engagement (36) adaptées pour être engagées dans ledit logement (21) formé dans ladite étagère (14).

10. Système selon une ou plusieurs des revendications précédentes, **caractérisé en ce qu'**une coque (37) adaptée pour recevoir ledit support d'étagère (20) est prévue, ladite coque (37) étant adaptée pour être disposée dans ledit logement (21) formé dans ladite étagère (14).

11. Système selon la revendication 10, **caractérisé en ce que** ladite coque (37) présente des sièges (45) pour des extensions (36) dudit support d'étagère (20).

12. Système selon la revendication 10 ou 11, **caractérisé en ce que** ladite coque (37) comporte une broche (41) qui peut être insérée dans un trou (40) dudit support d'étagère (20).

13. Système selon une ou plusieurs des revendications précédentes, **caractérisé en ce que** ladite douille (17), à l'une de ses extrémités disposée en alignement avec une surface intérieure (26) de l'épaulement (11) faisant face à l'étagère (14) ou un épaulement opposé (11) du meuble, présente une bride (24) dans laquelle est ménagée au moins une rainure (33), dans laquelle au moins une dent de retenue (34) est engagée, dépassant de la broche (19) qui s'étend depuis le support d'étagère (20).

14. Système selon une ou plusieurs des revendications précédentes, **caractérisé en ce que** ledit support d'étagère (20) présente une butée périmétrique (38) s'étendant vers l'extérieur qui définit une surface de support du support d'étagère (20) appropriée pour être positionnée contre une fraise complémentaire (39) formée dans ledit logement (21) de l'étagère (14).

15. Système selon une ou plusieurs des revendications précédentes, **caractérisé en ce que** quatre supports d'étagère (20) sont prévus, lesquels sont disposés deux de chaque côté dans les deux épaulements (11) pour recevoir une étagère (14) munie de quatre logements respectifs (21).
